# EUROPEAN PATENT SPECIFICATION

(11) **EP 2 002 030 B1**
(45) Date of publication and mention of the grant of the patent: **10.09.2014**
(21) Application number: 07712076.4
(22) Date of filing: 22.01.2007
(51) Int. Cl.: C23C 4/04, C23C 4/08, F01D 5/28, C23C 4/12, C23C 28/00

(54) **LAYERED THERMAL BARRIER COATING WITH A HIGH POROSITY, AND A COMPONENT**
GESCHICHTETE WÄRMESPERRENBESCHICHTUNG VON HOHER POROSITÄT UND EINE KOMPONENTE DAVON
REVETEMENT DE BARRIERE THERMIQUE EN COUCHES A FORTE POROSITE ET COMPOSANT

(30) Priority: 06.04.2006 WO PCT/EP2006/061370
(43) Date of publication of application: 17.12.2008
(73) Proprietor: Siemens Aktiengesellschaft, 80333 München (DE)
(72) Inventor: STAMM, Werner, 45481 Mülheim An Der Ruhr (DE)
(86) International application number: PCT/EP2007/050620
(87) International publication number: WO 2007/115839

(56) References cited:
- EP-A- 0 916 635
- EP-A- 1 219 721
- EP-A- 1 541 810
- EP-A- 1 731 630
- WO-A-2004/029330
- US-A1- 2003 138 658
- US-A1- 2004 126 599

## Description

The invention relates to a layered thermal barrier coating with a high porosity according to claim 1 and to a component according to claim 10.

US 4,299,865 discloses a two layered ceramic thermal barrier coating with an outer layer which has a very high porosity between 20 vol% and 33 vol% and a dense inner ceramic thermal barrier layer.

Patent EP 0 816 526 B1 discloses a thermal barrier coating system with only a single layer which has a porosity between 20 vol% and 35 vol%.

US 4,936,745 discloses a single ceramic layer which has a porosity between 20 vol% and 35 vol%.

EP 0 916 635 B1 discloses a porous ceramic multilayer system with a porosity higher then 20 vol% and an inner ceramic layer with a porosity smaller then 5 vol%.

US 2004/0126599 A1 discloses a two layered thermal barrier coating with different microstructures.

The thermal barrier coatings are substantially functional layers and are intended to protect the substrate, for example from excessive heat. The substrate has a sufficiently high mechanical strength. The thermal barrier coatings are likewise exposed to thermal stresses and/or mechanical stresses and may fail as a result of cracks.

Therefore, it is an object of the invention to provide a thermal barrier coating and a component in which the layers are better able to withstand thermal and mechanical stresses.

This object is achieved by a thermal barrier coating in accordance with claim 1 and by a component in accordance with claim 11.

Exemplary embodiments are shown in the figures.
- figure 1: shows one example of a thermal barrier coating,
- figure 2: shows another example of a thermal barrier coating,
- figure 3: lists some superalloys of substrates for the thermal barrier coating,
- figure 4: shows a gas turbine,
- figure 5: shows a turbine blade or vane and
- figure 6: shows a combustion chamber.

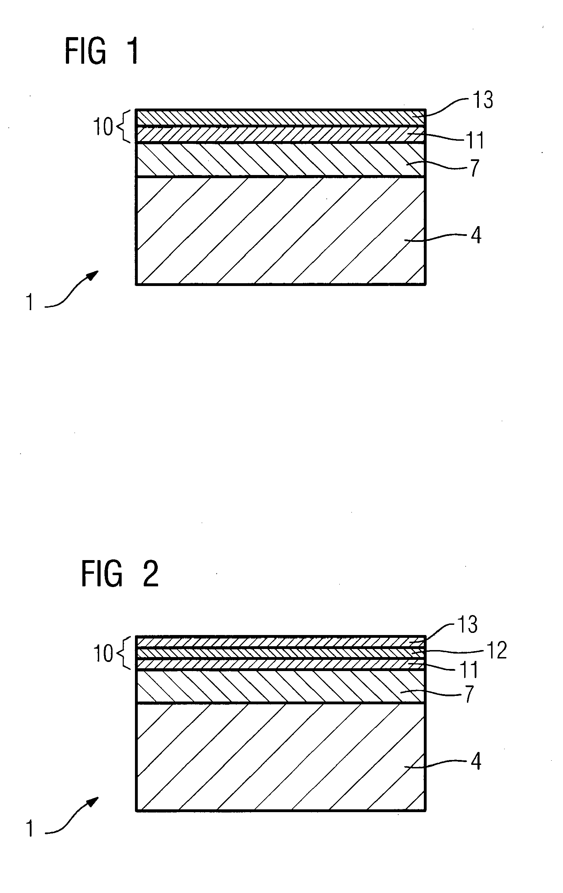

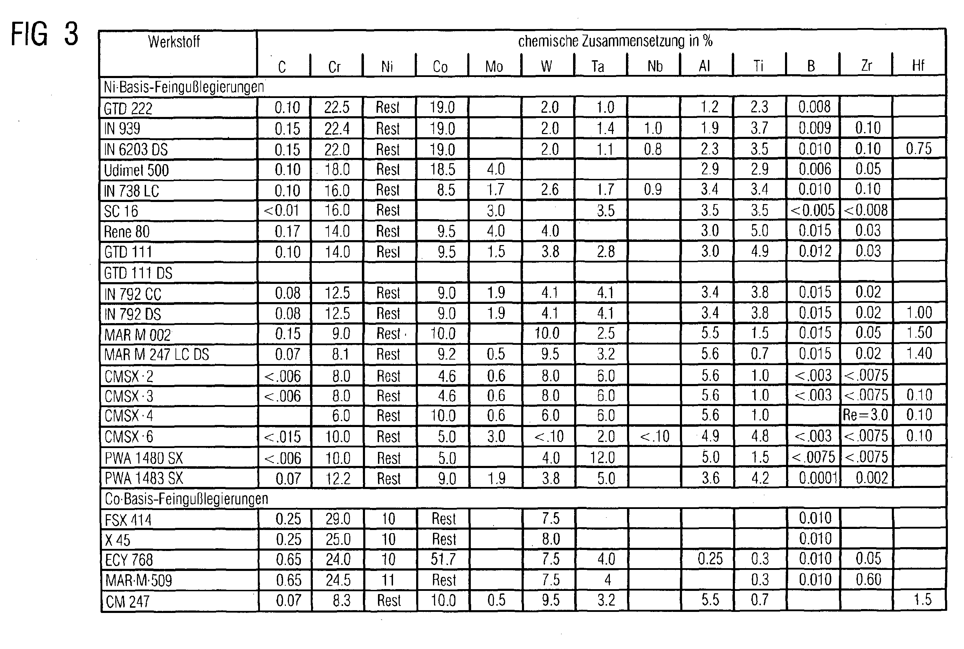

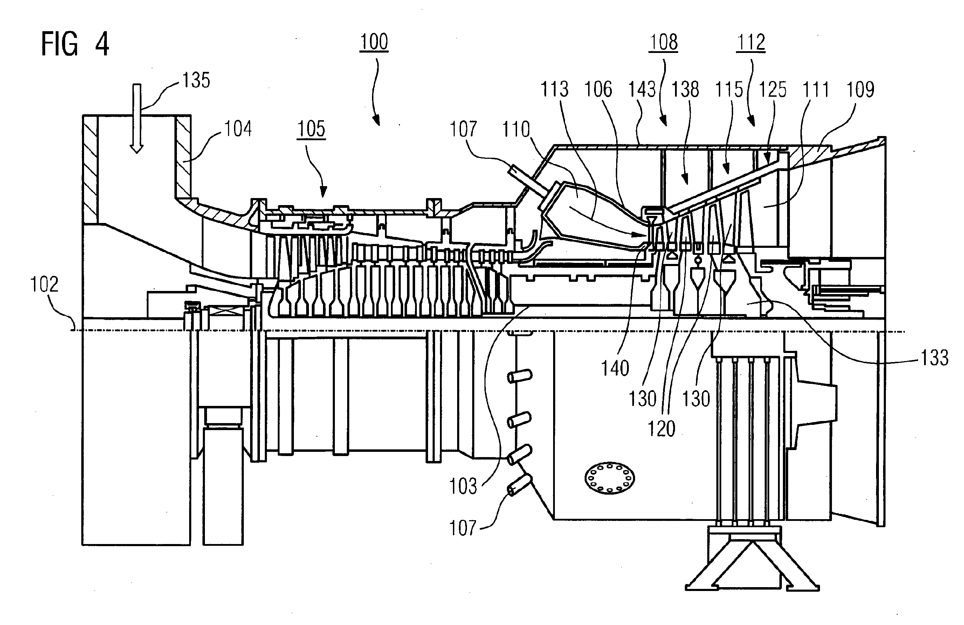

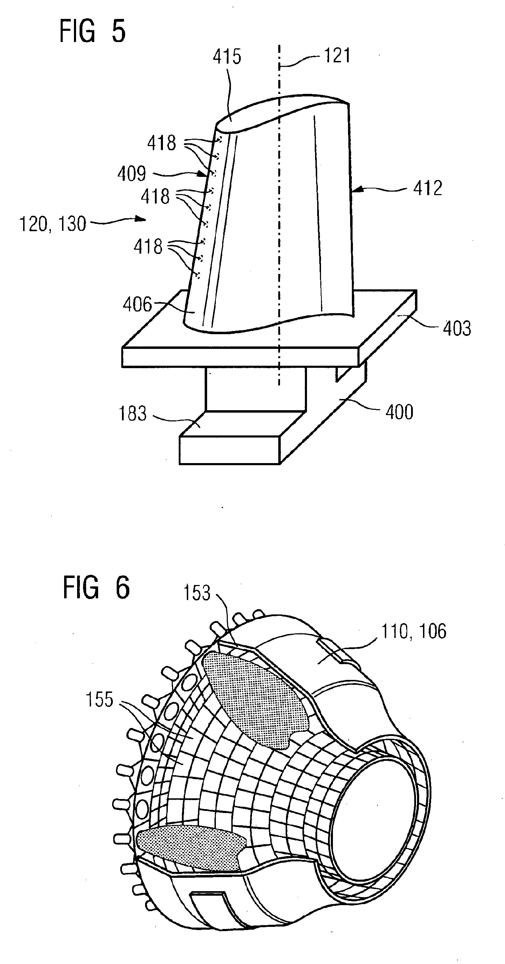

In figure 1 one example of a thermal barrier coating system 1 is shown.
The thermal barrier coating system 1 comprises a metallic substrate 4, which is cobalt or nickel based and is a component 120, 130 (fig. 5), 155 (fig. 6) for a gas turbine 100 (fig. 4). It is made of a superalloy (fig. 3).

A metallic bonding layer 7 of the MCrAlX type is preferably applied to this substrate 4. A thermally grown oxide layer (TGO) (not shown) is formed on this metallic bonding layer 7 during operation or before applying further coatings (10).

An at least two layered ceramic thermal barrier coating 10 is applied to the metallic bonding layer 7. The ceramic thermal barrier coating 10 has an inner ceramic thermal barrier layer 11 and an outer ceramic thermal barrier layer 13, which faces a hot medium, especially the hot gas path of a gas turbine 100.
The inner ceramic thermal barrier coating 11 is not the ceramic TGO.

Especially the inner ceramic thermal barrier coating 11 has the same chemical composition as the outer ceramic thermal barrier coating 13.

The outer ceramic layer 13 has a higher porosity than the inner ceramic layer 11.
The ranges of the porosity of the inner 11 and the outer 13 ceramic layers do not overlap and do not have same values.

One advantageous example is: the inner ceramic thermal barrier layer 11 has a porosity between 9 vol% and 11 vol% and the outer ceramic thermal barrier layer 13 has a porosity between 20 vol% and 27 vol%, especially between 21 vol% and 27 vol%, very especially between 23 vol% and 27 vol%.
It is clearly apparent that the maximum value of the porosity of the inner ceramic thermal barrier layer 11 is much lower than the minimum value of the porosity of the outer ceramic thermal barrier layer 13.

In figure 2 another example of the advantageous thermal barrier coating 10 is shown.
An intermediate ceramic thermal barrier layer 12 is present between the inner ceramic thermal barrier layer 11 and the outer ceramic thermal barrier layer 13, which faces a hot medium, especially the hot gas path of a gas turbine 100.

The inner ceramic thermal barrier coating 11 is not the ceramic TGO.
Especially the inner ceramic thermal barrier coating 11 has the same chemical composition as the intermediate ceramic thermal barrier coating 12 and the outer ceramic thermal barrier coating 13.

One advantageous example is: the inner ceramic thermal barrier layer 11 has a porosity between 9 vol% and 11 vol% and the outer ceramic thermal barrier layer 13 has a porosity between 20 vol% and 27 vol%, especially between 23 vol% and 27 vol%.
The porosity of the intermediate ceramic thermal barrier layer 12 is lower than the porosity of the outer ceramic thermal barrier layer 13. In particular, the porosity of the intermediate ceramic thermal barrier layer 12 fits between the ranges of the inner 11 and the outer 13 ceramic thermal barrier layers. More advantageously, the porosity of this layer 12 changes gradually between the value of the porosity of the inner ceramic thermal barrier layer 11 and the value of the outer ceramic thermal barrier layer 13.

The intermediate ceramic thermal barrier coating 12 has advantageous values for the layer thickness of up to 150 µm, especially up.to 75 µm.

In particular the inner ceramic thermal barrier layer 11 of the examples in figures 1, 2 has a thickness of 100 µm to 150 µm, especially 125 µm.

The outer ceramic thermal barrier coating 13 of the examples in figures 1, 2 has a thickness between 150 µm and 2 mm, especially between 1 mm and 2 mm.

The material for the ceramic coating 11, 12, 13 can be selected as desired, and in particular yttria-stabilized-zirconia (Y₂O₃ - ZrO₂) is used.
Even different materials for the coatings 11, 12, 13 can be used.

Especially the inner, the intermediate and the outer ceramic thermal barrier coatings are plasma-sprayed.

This means in general, that the morphology of the inner, the intermediate or the outer ceramic thermal barrier coating has not a columnar structure, like EB-PVD-layers, but a flattened grain structure.

Especially the thermal barrier coating 10 consists of two layers which are an inner ceramic thermal barrier coating 11 and an outermost ceramic thermal barrier layer 13.

Very especially the thermal barrier coating 10 consists of three layers: an inner ceramic thermal barrier layer 11, an intermediate ceramic thermal barrier layer 12 and an outermost ceramic thermal barrier layer 13.

Figure 4 shows, by way of example, a partial longitudinal section through a gas turbine 100.
In the interior, the gas turbine 100 has a rotor 103 which is mounted such that it can rotate about an axis of rotation 102, has a shaft 101 and is also referred to as the turbine rotor. An intake housing 104, a compressor 105, a, for example, toroidal combustion chamber 110, in particular an annular combustion chamber, with a plurality of coaxially arranged burners 107, a turbine 108 and the exhaust-gas housing 109 follow one another along the rotor 103.
The annular combustion chamber 110 is in communication with a, for example, annular hot-gas passage 111, where, by way of example, four successive turbine stages 112 form the turbine 108.
Each turbine stage 112 is formed, for example, from two blade or vane rings. As seen in the direction of flow of a working medium 113, in the hot-gas passage 111 a row of guide vanes 115 is followed by a row 125 formed from rotor blades 120. The guide vanes 130 are secured to an inner housing 138 of a stator 143, whereas the rotor blades 120 of a row 125 are fitted to the rotor 103 for example by means of a turbine disk 133.
A generator (not shown) is coupled to the rotor 103.

While the gas turbine 100 is operating, the compressor 105 sucks in air 135 through the intake housing 104 and compresses it. The compressed air provided at the turbine-side end of the compressor 105 is passed to the burners 107, where it is mixed with a fuel. The mix is then burnt in the combustion chamber 110, forming the working medium 113. From there, the working medium 113 flows along the hot-gas passage 111 past the guide vanes 130 and the rotor blades 120. The working medium 113 is expanded at the rotor blades 120, transferring its momentum, so that the rotor blades 120 drive the rotor 103 and the latter in turn drives the generator coupled to it.

While the gas turbine 100 is operating, the components which are exposed to the hot working medium 113 are subject to thermal stresses. The guide vanes 130 and rotor blades 120 of the first turbine stage 112, as seen in the direction of flow of the working medium 113, together with the heat shield bricks which line the annular combustion chamber 110, are subject to the highest thermal stresses.
To be able to withstand the temperatures which prevail there, they can be cooled by means of a coolant.
Substrates of the components may likewise have a directional structure, i.e. they are in single-crystal form (SX structure) or have only longitudinally oriented grains (DS structure).
By way of example, iron-based, nickel-based or cobalt-based superalloys are used as material for the components, in particular for the turbine blade or vane 120, 130 and components of the combustion chamber 110.

Superalloys of this type are known, for example, from EP 1 204 776 B1, EP 1 306 454, EP 1 319 729 A1, WO 99/67435 or WO 00/44949; these documents form part of the disclosure with regard to the chemical composition of the alloys.

The guide vane 130 has a guide vane root (not shown here) facing the inner housing 138 of the turbine 108 and a guide vane head at the opposite end from the guide vane root. The guide vane head faces the rotor 103 and is fixed to a securing ring 140 of the stator 143.

Figure 5 shows a perspective view of a rotor blade 120 or guide vane 130 of a turbomachine, which extends along a longitudinal axis 121.

The turbomachine may be a gas turbine of an aircraft or of a power plant for generating electricity, a steam turbine or a compressor.

The blade or vane 120, 130 has, in succession along the longitudinal axis 121, a securing region 400, an adjoining blade or vane platform 403 and a main blade or vane part 406 as well as a blade or vane tip 415.
As a guide vane 130, the vane 130 may have a further platform (not shown) at its vane tip 415.

A blade or vane root 183, which is used to secure the rotor blades 120, 130 to a shaft or disk (not shown), is formed in the securing region 400.
The blade or vane root 183 is designed, for example, in hammerhead form. Other configurations, such as a fir-tree or dovetail root, are possible.
The blade or vane 120, 130 has a leading edge 409 and a trailing edge 412 for a medium which flows past the main blade or vane part 406.

In the case of conventional blades or vanes 120, 130, by way of example solid metallic materials, in particular superalloys, are used in all regions 400, 403, 406 of the blade or vane 120, 130.

Superalloys of this type are known, for example, from EP 1 204 776 B1, EP 1 306 454, EP 1 319 729 A1, WO 99/67435 or WO 00/44949; these documents form part of the disclosure with regard to the chemical composition of the alloy.
The blade or vane 120, 130 may in this case be produced by a casting process, also by means of directional solidification, by a forging process, by a milling process or combinations thereof.

Workpieces with a single-crystal structure or structures are used as components for machines which, in operation, are exposed to high mechanical, thermal and/or chemical stresses. Single-crystal workpieces of this type are produced, for example, by directional solidification from the melt. This involves casting processes in which the liquid metallic alloy solidifies to form the single-crystal structure, i.e. the single-crystal workpiece, or solidifies directionally.
In this case, dendritic crystals are oriented along the direction of heat flow and form either a columnar crystalline grain structure (i.e. grains which run over the entire length of the workpiece and are referred to here, in accordance with the language customarily used, as directionally solidified) or a single-crystal structure, i.e. the entire workpiece consists of one single crystal. In these processes, a transition to globular (polycrystalline) solidification needs to be avoided, since non-directional growth inevitably forms transverse and longitudinal grain boundaries, which negate the favorable properties of the directionally solidified or single-crystal component.

Where the text refers in general terms to directionally solidified microstructures, this is to be understood as meaning both single crystals, which do not have any grain boundaries or at most have small-angle grain boundaries, and columnar crystal structures, which do have grain boundaries running in the longitudinal direction but do not have any transverse grain boundaries. This second form of crystalline structures is also described as directionally solidified microstructures (directionally solidified structures). Processes of this type are known from US A 6,024,792 and EP 0 892 090 A1; these documents form part of the disclosure with regard to the solidification process.

The blades or vanes 120, 130 may likewise have coatings protecting against corrosion or oxidation, e.g. MCrAlX (M is at least one element selected from the group consisting of iron (Fe), cobalt (Co), nickel (Ni), X is an active element and represents yttrium (Y) and/or silicon and/or at least one rare earth element, or hafnium (Hf)). Alloys of this type are known from EP 0 486 489 B1, EP 0 786 017 B1, EP 0 412 397 B1 or EP 306 454 A1, which are intended to form part of the present disclosure with regard to the chemical composition of the alloy.
The density is preferably 95% of the theoretical density.
A protective aluminum oxide layer (TGO = thermally grown oxide layer) forms on the MCrAlX layer (as an intermediate layer or an outermost layer).

It is also possible for a thermal barrier coating, consisting for example of ZrO₂, Y₂O₃-ZrO₂, i.e. unstabilized, partially stabilized or fully stabilized by yttrium oxide and/or calcium oxide and/or magnesium oxide, which is preferably the outermost layer, to be present on the MCrAlX.
The thermal barrier coating covers the entire MCrAlX layer. Columnar grains are produced in the thermal barrier coating by means of suitable coating processes, such as for example electron beam physical vapor deposition (EB-PVD).
Other coating processes are conceivable, for example atmospheric plasma spraying (APS), LPPS, VPS or CVD. The thermal barrier coating may include porous grains which have microcracks or macrocracks for improving its resistance to thermal shocks. The thermal barrier coating is therefore preferably more porous than the MCrAlX layer.

The blade or vane 120, 130 may be hollow or solid in form. If the blade or vane 120, 130 is to be cooled, it is hollow and may also have film-cooling holes 418 (indicated by dashed lines).

Figure 6 shows a combustion chamber 110 of the gas turbine 100. The combustion chamber 110 is configured, for example, as what is known as an annular combustion chamber, in which a multiplicity of burners 107 arranged circumferentially around an axis of rotation 102 open out into a common combustion chamber space 154 and generate flames 156. For this purpose, the combustion chamber 110 overall is of annular configuration positioned around the axis of rotation 102.

To achieve a relatively high efficiency, the combustion chamber 110 is designed for a relatively high temperature of the working medium M of approximately 1000°C to 1600°C. To allow a relatively long service life even with these operating parameters, which are unfavorable for the materials, the combustion chamber wall 153 is provided, on its side which faces the working medium M, with an inner lining formed from heat shield elements 155.

A cooling system may also be provided for the heat shield elements 155 and/or their holding elements, on account of the high temperatures in the interior of the combustion chamber 110. The heat shield elements 155 are then, for example, hollow and if appropriate also have cooling holes (not shown) opening out into the combustion chamber space 154.

Each heat shield element 155 made from an alloy is provided on the working medium side with a particularly heat-resistant protective layer (MCrAlX layer and/or ceramic coating) or is made from high-temperature-resistant material (solid ceramic bricks).
These protective layers may be similar to those used for the turbine blades or vanes, i.e. for example meaning MCrAlX: M is at least one element selected from the group consisting of iron (Fe), cobalt (Co), nickel (Ni), X is an active element and represents yttrium (Y) and/or silicon and/or at least one rare earth element, or hafnium (Hf). Alloys of this type are known from EP 0 486 489 B1, EP 0 786 017 B1, EP 0 412 397 B1 or EP 1 306 454 A1, which are intended to form part of the present disclosure with regard to the chemical composition of the alloy.

It is also possible for a, for example, ceramic thermal barrier coating, consisting for example of ZrO₂, Y₂O₃-ZrO₂, i.e. unstabilized, partially stabilized or fully stabilized by yttrium oxide and/or calcium oxide and/or magnesium oxide, to be present on the MCrAlX.
Columnar grains are produced in the thermal barrier coating by means of suitable coating processes, such as for example electron beam physical vapor deposition (EB-PVD).
Other coating processes are conceivable, for example atmospheric plasma spraying (APS), LPPS, VPS or CVD. The thermal barrier coating may have porous grains which have microcracks or macrocracks to improve its resistance to thermal shocks.

Refurbishment means that after they have been used, protective layers may have to be removed from turbine blades or vanes 120, 130, heat shield elements 155 (e.g. by sand-blasting). Then, the corrosion and/or oxidation layers and products are removed. If appropriate, cracks in the turbine blade or vane 120, 130 or the heat shield element 155 are also repaired. This is followed by recoating of the turbine blades or vanes 120, 130, heat shield elements 155, after which the turbine blades or vanes 120, 130 or the heat shield elements 155 can be reused.

## Claims

1. Thermal barrier coating (10) for a component (1, 120, 130, 138, 155),
which has an inner ceramic thermal barrier layer (11),
which is the closest to a substrate (4) of the component and
which (11) has a porosity between 9 vol% and 11 vol%, and an outer ceramic thermal barrier layer (13),
which has a porosity between 20 vol% and 27 vol%,
and which has an intermediate ceramic thermal barrier layer (12) which is present between the inner (11) and the outer (13) ceramic thermal barrier layer,
wherein the porosity of the intermediate ceramic thermal barrier layer (12) is between the maximum value of the inner ceramic layer (11) and the minimum value of the outer ceramic layer (13).

2. Thermal barrier coating according to claim 1,
in which the porosity of the intermediate ceramic thermal barrier layer (12) changes gradually from a minimum to a maximum value.

3. Thermal barrier coating according to claim 1,
in which the porosity of the intermediate ceramic thermal barrier layer (12) increases from the porosity of the inner layer (11) to the porosity of the outer layer (12), especially from (9 vol% - 11 vol%) to (20 vol% - 27 vol%), especially from (9 vol% - 11 vol%) to (21 vol% - 27 vol%), very especially from (9 vol% - 11 vol%) to (23 vol% to 27 vol%).

4. Thermal barrier coating according to claim 1,
in which the porosity of the intermediate ceramic thermal barrier layer (12) has a constant value between (9 vol% - 11 vol%) and (20 vol% - 27 vol%).

5. Thermal barrier coating according to any of the preceding claims,
in which the layer thickness of the inner ceramic thermal barrier layer (11) is between 100µm and 150µm.

6. Thermal barrier coating according to any of the preceding claims,
in which the layer thickness of the intermediate ceramic thermal barrier layer (12) is up to 150µm.

7. Thermal barrier coating according to any of the preceding claims,
in which the layer thickness of the ceramic outer barrier layer (13) is between 150µm and 2000µm.

8. Thermal barrier coating according to any of the preceding claims,
in which the material of the ceramic thermal barrier layers (11, 12, 13) is made of yttria-stabilized-zirconia (Y₂O₃-ZrO₂).

9. Thermal barrier coating according to any of the preceding claims,
wherein the thermal barrier coating (10) consists of three layers (11, 12, 13).

10. Component having a thermal barrier coating (10) on a substrate (4) according to any of claims 1 to 9.

11. Component according to claim 10,
in which an intermediate metallic layer (7) on the substrate is made of (in wt%):
Ni-12Co-21Cr-11Al-O.4Y-Re.

12. Component according to claim 10,
in which an intermediate metallic layer (7) on the substrate (4) is made of (in wt%):
Ni-25Co-17Cr-10Al-0.5Y-Re.

13. Component according to claim 10,
in which an intermediate metallic layer (7) on the substrate (4) is made of (in wt%):
Co-30Ni-28Cr-8Al-0.6Y-0.7Si.

14. Component according to claim 10, 11, 12 or 13,
in which the substrate (4) is nickel based.

15. Component according to claim 10, 11, 12 or 13,
in which the substrate (4) is cobalt based.

16. Component according to any of claims 10 to 15,
which is a turbine blade (120), turbine vane (130), a heat shield (155) or a casing (158)

## Patentansprüche

1. Wärmedämmschicht (10) für ein Bauteil (1, 120, 130, 138, 155),
die eine innere keramische Wärmedämmschicht (11), die einem Substrat (4) des Bauteils am nächsten liegt und die (11) eine Porosität zwischen 9 Vol.-% und 11 Vol.-% aufweist,
und eine äußere keramische Wärmedämmschicht (13), die eine Porosität zwischen 20 Vol.-% und 27 Vol.-% aufweist,
und die eine intermediäre keramische Wärmedämmschicht (12), die zwischen der inneren keramischen Wärmedämmschicht (11) und der äußeren keramischen Wärmedämmschicht (13) vorliegt, aufweist,
wobei die Porosität der intermediären keramischen Wärmedämmschicht (12) zwischen dem Maximalwert der inneren keramischen Schicht (11) und dem Minimalwert der äußeren keramischen Schicht (13) liegt.

2. Wärmedämmschicht nach Anspruch 1,
wobei sich die Porosität der intermediären keramischen Wärmedämmschicht (12) allmählich von einem Minimalwert zu einem Maximalwert ändert.

3. Wärmedämmschicht nach Anspruch 1,
wobei die Porosität der intermediären keramischen Wärmedämmschicht (12) von der Porosität der inneren Schicht (11) zur Porosität der äußeren Schicht (12) zunimmt, insbesondere von (9 Vol.-% - 11 Vol.-%) auf (20 Vol.-% und 27 Vol.-%), insbesondere von (9 Vol.-% - 11 Vol.-%) auf (21 Vol.-% und 27 Vol.-%), ganz besonders von (9 Vol.-% - 11 Vol.-%) auf (23 Vol.-% und 27 Vol.-%).

4. Wärmedämmschicht nach Anspruch 1,
wobei die Porosität der intermediären keramischen Wärmedämmschicht (12) einen konstanten Wert zwischen(9 Vol.-% - 11 Vol.-%) und (20 Vol.-% und 27 Vol.-%) aufweist.

5. Wärmedämmschicht nach einem der vorhergehenden Ansprüche,
wobei die Schichtdicke der inneren keramischen Wärmedämmschicht (11) zwischen 100 µm und 150 µm liegt.

6. Wärmedämmschicht nach einem der vorhergehenden Ansprüche,
wobei die Schichtdicke der intermediären keramischen Wärmedämmschicht (12) bis zu 150 µm beträgt.

7. Wärmedämmschicht nach einem der vorhergehenden Ansprüche,
wobei die Schichtdicke der äußeren keramischen Dämmschicht (13) zwischen 150 µm und 2000 µm liegt.

8. Wärmedämmschicht nach einem der vorhergehenden Ansprüche,
wobei das Material der keramischen Wärmedämmschichten (11, 12, 13) aus yttriumoxidstabilisiertem Zirkonoxid (Y₂O₃-ZrO₂) besteht.

9. Wärmedämmschicht nach einem der vorhergehenden Ansprüche,
wobei die Wärmedämmschicht (10) aus drei Schichten (11, 12, 13) besteht.

10. Bauteil mit einer Wärmedämmschicht (10) auf einem Substrat (4) nach einem der Ansprüche 1 bis 9.

11. Bauteil nach Anspruch 10,
wobei eine intermediäre metallische Schicht (7) auf dem Substrat aus (in Gew.-%):
Ni-12Co-21Cr-11Al-0,4Y-Re
besteht.

12. Bauteil nach Anspruch 10,
wobei eine intermediäre metallische Schicht (7) auf dem Substrat (4) aus (in Gew.-%):
Ni-25Co-17Cr-10Al-0,5Y-Re
besteht.

13. Bauteil nach Anspruch 10,
wobei eine intermediäre metallische Schicht (7) auf dem Substrat (4) aus (in Gew.-%):
Co-30Ni-28Cr-8Al-0,6Y-0,7Si
besteht.

14. Bauteil nach Anspruch 10, 11, 12 oder 13,
wobei das Substrat (4) auf Nickel basiert.

15. Bauteil nach Anspruch 10, 11, 12 oder 13,
wobei das Substrat (4) auf Cobalt basiert.

16. Bauteil nach einem der Ansprüche 10 bis 15,
bei dem es sich um eine Turbinenlaufschaufel (120), eine Turbinenleitschaufel (130), einen Hitzeschild (155) oder ein Gehäuse (158) handelt.

## Revendications

1. Revêtement ( 10 ) formant barrière thermique pour une pièce ( 1, 120, 130, 138, 155 ),
qui a une couche ( 11 ) intérieure en céramique formant barrière thermique,
qui est la plus proche d'un substrat ( 4 ) de la pièce et qui ( 11 ) a une porosité comprise entre 9 % en volume et 11 % en volume,
et une couche ( 13 ) extérieure en céramique formant barrière thermique,
qui a une porosité comprise entre 20 % en volume et 27 % en volume,
et qui a une couche ( 12 ) intermédiaire en céramique formant barrière thermique, qui est présente entre la couche intérieure ( 11 ) et extérieure ( 13 ) en céramique formant barrière thermique,
dans lequel la porosité de la couche ( 12 ) intermédiaire en céramique formant barrière thermique est comprise entre la valeur maximum de la couche ( 11 ) intérieure en céramique et la valeur minimum de la couche ( 13 ) extérieure en céramique.

2. Revêtement formant barrière thermique suivant la revendication 1,
dans lequel la porosité de la couche ( 12 ) intermédiaire en céramique formant barrière thermique passe graduellement d'une valeur minimum à une valeur maximum.

3. Revêtement formant barrière thermique suivant la revendication 1,
dans lequel la porosité de la couche ( 12 ) intermédiaire en céramique formant barrière thermique augmente de la porosité de la couche ( 11 ) intérieure à la porosité de la couche ( 12 ) extérieure en particulier de ( 9 % en volume à 11 % en volume ) à ( 20 % en volume à 27 % en volume ), en particulier de ( 9 % en volume à 11 % en volume ) à ( 21 % en volume à 27 % en volume ), tout particulièrement de ( z en volume à 11 % en volume ) à ( 23 % en volume à 27 % en volume ).

4. Revêtement formant barrière thermique suivant la revendication 1,
dans lequel la porosité de la couche ( 12 ) intermédiaire en céramique formant barrière thermique a une valeur constante comprise entre ( 9 % en volume à 11 % en volume ) et ( 20 % en volume à 27 % en volume ).

5. Revêtement formant barrière thermique suivant l'une quelconque des revendications précédentes,
dans lequel l'épaisseur de la couche ( 11 ) intérieure en céramique formant barrière thermique est comprise entre 100 µm et 150 µm.

6. Revêtement formant barrière thermique suivant l'une quelconque des revendications précédentes,
dans lequel l'épaisseur de la couche ( 12 ) intermédiaire en céramique formant barrière thermique va jusqu'à 150 µm.

7. Revêtement formant barrière thermique suivant l'une quelconque des revendications précédentes,
dans lequel l'épaisseur de la couche ( 13 ) extérieure en céramique formant barrière est comprise entre 150 µm et 2000 µm.

8. Revêtement formant barrière thermique suivant l'une quelconque des revendications précédentes,
dans lequel le matériau des couches ( 11, 12, 13 ) en céramique formant barrière thermique est fait d'oxyde de zirconium stabilisé par de l'oxyde d'yttrium ( Y₂O₃-ZrO₂ ).

9. Revêtement formant barrière thermique suivant l'une quelconque des revendications précédentes,
dans lequel le revêtement ( 10 ) formant barrière thermique consiste en seulement trois couches ( 11, 12, 13 ).

10. Pièce ayant un revêtement ( 10 ) formant barrière thermique sur un substrat ( 4 ) suivant l'une quelconque des revendications 1 à 9.

11. Pièce suivant la revendication 10,
dans laquelle une couche ( 7 ) métallique intermédiaire sur le substrat est faite de ( en pourcentage en poids ) :
Ni-12Co-21Cr-11A1-0,4Y-Re.

12. Pièce suivant la revendication 10,
dans laquelle une couche ( 7 ) métallique intermédiaire sur le substrat est faite de ( en pourcentage en poids ) :
Ni-25Co-17Cr-10A1-0,5Y-Re.

13. Pièce suivant la revendication 10,
dans laquelle une couche ( 7 ) métallique intermédiaire sur le substrat est faite de ( en pourcentage en poids ) :
Ci-30Ni-28Cr-8A1-0,6Y-0,7Si.

14. Pièce suivant la revendication 10, 11, 12, ou 13,
dans laquelle le substrat ( 4 ) est à base de nickel.

15. Pièce suivant la revendication 10, 11, 12 ou 13,
dans laquelle le substrat ( 4 ) est à base de cobalt.

16. Pièce suivant l'une quelconque des revendications 10 à 15, qui est une aube ( 120 ) mobile de turbine, une aube ( 130 ) directrice de turbine, un bouclier ( 155 ) thermique ou une carcasse ( 158 ).
